# EUROPÄISCHE PATENTSCHRIFT

(11) **EP 2 992 593 B1**
(45) Veröffentlichungstag und Bekanntmachung des Hinweises auf die Patenterteilung: **18.11.2020**
(21) Anmeldenummer: 14719665.3
(22) Anmeldetag: 10.04.2014
(51) Int. Cl.: H02K 5/10, H02K 1/18, H02K 9/18, H02K 1/16, H02K 1/20, H02K 1/32, H02K 9/14, H02K 9/16, H02K 3/50, H02K 5/22

(54) **ELEKTRISCHE MASCHINE MIT EINER SCHUTZHAUBE UND STATOR DAFÜR**
ELECTRICAL MACHINE WITH A PROTECTIVE HOOD AND STATOR THEREFOR
MACHINE ÉLECTRIQUE POURVUE D'UN ENVELOPPE PROTECTRICE ET STATOR ASSOCIÉ

(30) Priorität: 29.04.2013 EP 13165794
(43) Veröffentlichungstag der Anmeldung: 09.03.2016
(73) Patentinhaber: Siemens Aktiengesellschaft, 80333 München (DE)
(72) Erfinder: FICHTNER, Siegfried, 90584 Allersberg (DE); GRILLENBERGER, Reiner, 91575 Windsbach (DE); KOCH, Thomas, 90459 Nürnberg (DE)
(86) Internationale Anmeldenummer: PCT/EP2014/057276
(87) Internationale Veröffentlichungsnummer: WO 2014/177356

(56) Entgegenhaltungen:
- WO-A2-2012/159660
- US-A1- 2004 150 270
- US-A1- 2012 126 642

## Beschreibung

Die Erfindung betrifft eine elektrische Maschine gemäß dem Oberbegriff des Patentanspruchs 1 und einen Stator für die elektrische Maschine. Ferner betrifft die Erfindung ein Verfahren zur Herstellung des Stators sowie ein Verfahren zur Herstellung der elektrischen Maschine.

Eine derartige elektrische Maschine wird zur Umwandlung von elektrischer in mechanische Energie und umgekehrt eingesetzt. Bei der Umwandlung von mechanischer in elektrische Energie wird die elektrische Maschine als Generator eingesetzt. Bei der Umwandlung von elektrischer in mechanische Energie wird die elektrische Maschine als Motor eingesetzt. Die elektrische Maschine weist hierfür je nach Leistungsanforderung an die elektrische Maschine, deren Abmessungen, sowie den Umgebungsbedingungen eine Kühlvorrichtung auf.

So sind z.B. aus der WO 2012/159660 A2 elektrische Maschinen bekannt, die auf einem Plattformkonzept beruhen, das sämtliche Kühlarten einzeln oder in Kombination, wie z.B. eigen- oder fremdbelüftet, wassergekühlt oder wassergekühlt mit Fremdbelüftung, als auch einen separaten Aufsatzkühler realisierbar machen. Je nach Einsatzort und klimatischen Anforderungen lassen sich somit in einfacher Art und Weise die elektrischen Maschinen bei optimalem Wirkungsgrad an die Gegebenheiten anpassen. In der WO 2012/159660 A2 liegt dem Plattformkonzept ein selbsttragendes Gehäuse zugrunde. Es wird dort bei einer Ausführung der Schutzart gemäß IEC 34-5, die eine Schutzhaube erfordert, bei einem Montagevorgang ein Blechpaket mit einer nicht näher dargestellten Wicklung und einer Schutzhaube axial in das Gehäuse eingesetzt. Die genannte Veröffentlichung zeigt Schutzhauben, die das Wicklungssystem und/oder die Füllrohre abdecken und so gegen äußere Einflüsse je nach Anforderung der Schutzart gemäß IEC 34-5 schützen. Rippen oder Sicken versteifen dabei die Schutzhauben.

Aus der US 2004/0150270 A1 ist eine elektrische Maschine beschrieben und zeigt, die einen Stator mit einem Blechpaket aufweist, das axial geschichtete Bleche aufweist, die von einem ersten axialen Ende zu einem zweiten axialen Ende verlaufen, des Weiteren wird ein Rotor gezeigt, der um eine axialverlaufende Drehachse drehbar gelagert ist und im Betrieb der elektrischen Maschine über einen Luftspalt mit dem Stator zusammenwirkt, eine Wicklung, die am Luftspalt angeordnet ist und eine Schutzhaube, wobei der Luftspalt in radialen Richtungen die senkrecht zur axialen Richtung orientiert sind durch den Stator und den Rotor begrenzt ist, wobei der Stator eine Druckvorrichtung aufweist, die an einem axialen Ende angeordnet ist, wobei die Schutzhaube an einer Druckvorrichtung des Blechpaketes durch eine Befestigungseinheit die einen ersten Befestigungsbereich an der Schutzhaube und einen zweiten Befestigungsbereich an der Druckvorrichtung aufweist an einer Anschlussstelle befestigt ist.

Weiterhin ist aus US 2004/0150270 A1 bekannt ein: Stator für eine derartige elektrische Maschine, bei der der Luftspalt in radialen Richtungen, die senkrecht zur axialen Richtung orientiert sind, durch den Stator und den Rotor begrenzt ist und die die Wicklung, die am Luftspalt angeordnet ist, und den Rotor umfasst, der um die axial verlaufende Drehachse drehbar gelagert ist und in dem Betrieb der elektrischen Maschine über den Luftspalt mit dem Stator zusammenwirkt, - wobei der Stator das Blechpaket aufweist, das in der axialen Richtung geschichtete Bleche umfasst, die von dem ersten axialen Ende zu dem zweiten axialen Ende angeordnet sind, - wobei der Stator die erste Druckvorrichtung aufweist, die an dem ersten axialen Ende angeordnet ist, wobei die erste Schutzhaube an der ersten Druckvorrichtung durch die Befestigungseinheit, die den ersten Befestigungsbereich an der ersten Schutzhaube und den zweiten Befestigungsbereich an der ersten Druckvorrichtung aufweist, an der Anschlussstelle festgelegt befestigt ist.

Ausserdem ist aus US 2004/0150270 A1 bekannt ein: Verfahren zur Herstellung eines derartigen Stators für eine derartige elektrische Maschine, bei der der Luftspalt in radialen Richtungen, die senkrecht zur axialen Richtung orientiert sind, durch den Stator und den Rotor begrenzt ist und die die Wicklung, die am Luftspalt angeordnet ist, und den Rotor umfasst, der um die axial verlaufende Drehachse drehbar gelagert ist und in dem Betrieb der elektrischen Maschine über den Luftspalt mit dem Stator zusammenwirkt, - wobei der Stator das Blechpaket aufweist, das in der axialen Richtung geschichtete Bleche umfasst, die von dem ersten axialen Ende zu dem zweiten axialen Ende angeordnet sind, - wobei der Stator die erste Druckvorrichtung auf weist, die an dem ersten axialen Ende angeordnet ist, wobei eine erste Schutzhaube vorgesehen wird, wobei die erste Schutzhaube an der ersten Druckvorrichtung durch eine Befestigungseinheit, die einen ersten Befestigungsbereich an der ersten Schutzhaube und einen zweiten Befestigungsbereich an der ersten Druckvorrichtung aufweist, an einer Anschlussstelle festgelegt befestigt wird.

Schliesslich ist aus US 2004/0150270 A1 bekannt ein: Verfahren zur Herstellung einer derartigen elektrischen Maschine, bei der der Luftspalt in radialen Richtungen, die senkrecht zur axialen Richtung orientiert sind, durch den Stator und den Rotor begrenzt ist und die die Wicklung, die am Luftspalt angeordnet ist, und den Rotor umfasst, der um die axial verlaufende Drehachse drehbar gelagert ist und in dem Betrieb der elektrischen Maschine über den Luftspalt mit dem Stator zusammenwirkt, - wobei der Stator das Blechpaket aufweist, das in der axialen Richtung geschichtete Bleche umfasst, die von dem ersten axialen Ende zu dem zweiten axialen Ende angeordnet sind, - wobei der Stator die erste Druckvorrichtung aufweist, die an dem ersten axialen Ende angeordnet ist, wobei eine erste Schutzhaube vorgesehen wird, wobei die erste Schutzhaube an der ersten Druckvorrichtung durch eine Befestigungseinheit, die einen ersten Befestigungsbereich an der ersten Schutzhaube und einen zweiten Befestigungsbereich an der ersten Druckvorrichtung aufweist, an einer Anschlussstelle festgelegt befestigt wird.

Da je nach Ausführung einer elektrischen Maschine eine bestimmte Schutzart, z.B. eine bestimmte Schutzart gemäß IEC 34-5, gefordert ist, ist es wichtig, einen weiteren technischen Beitrag zu leisten, der allein, alternativ oder in Kombination mit bekannten Maßnahmen es ermöglicht, eine elektrische Maschine zur Verfügung zu stellen, bei der in einfacher Weise ein Schutz vor Umwelteinflüssen erreicht wird.

Der Erfindung liegt daher die Aufgabe zugrunde, eine elektrische Maschine zur Verfügung zu stellen, bei der in einfacher Weise ein Schutz vor Umwelteinflüssen erreicht wird.

Die Aufgabe wird durch eine elektrische Maschine mit den Merkmalen des Anspruchs 1 gelöst.

Die Aufgabe wird auch durch einen Stator für eine elektrische Maschine mit den Merkmalen nach Anspruch 12 gelöst.

Die Aufgabe wird auch durch ein Verfahren zur Herstellung eines Stators mit den Verfahrensschritten nach Anspruch 13 gelöst.

Ferner wird die Aufgabe durch ein Verfahren zur Herstellung einer elektrischen Maschine mit den Verfahrensschritten nach Anspruch 14 gelöst.

Die erfindungsgemäße elektrische Maschine löst die Aufgabe mit den Merkmalen des kennzeichnenden Teils aus Anspruch 1. So wird in einfacher Weise ein Schutz vor Umwelteinflüssen platzsparend und kostengünstig im größeren Maße erreicht. Der Schutz vor Umwelteinflüssen umfasst insbesondere das Verhindern des Eindringens von Umwelteinflüssen in einen inneren Bereich der elektrischen Maschine mit hoher Qualität.

Die Wicklung kann einen ersten Wicklungskopf aufweisen, den die erste Schutzhaube umgibt, wobei sich die erste Schutzhaube in der axialen Richtung mindestens von der ersten Druckvorrichtung bis zu einem ersten Ende des ersten Wicklungskopfes erstrecken kann, das der ersten Druckvorrichtung abgewandt ist. So wird vorteilhaft ein Schutz des ersten Wicklungskopfes vor Umwelteinflüssen erreicht, wobei der erste Wicklungskopf in dem inneren Bereich der elektrischen Maschine vorhanden sein kann.

Bei einem Betrieb einer erfindungsgemäßen elektrischen Maschine als Generator wird der Rotor durch mechanische Energie in Drehung versetzt. Durch ein magnetisches Zusammenwirken zwischen Rotor und Stator kann die mechanische in elektrische Energie umgewandelt werden. Die elektrische Energie kann an der Wicklung, die am Luftspalt angeordnet ist, durch Anschließen eines elektrischen Verbrauchers entnommen werden. Die Wicklung kann hierbei am Stator befestigt sein. Bei einem Betrieb einer erfindungsgemäßen elektrischen Maschine als Motor wird über die Wicklung elektrische Energie zugeführt und durch das magnetische Zusammenwirken zwischen Stator und Rotor elektrische Energie in mechanische Energie umgewandelt.

Dabei wird der Rotor in Drehung versetzt und es kann an einer Welle mechanische Energie an einen mechanischen Verbraucher in Form einer Drehbewegung abgegeben werden. Auch hier kann die Wicklung am Stator befestigt sein.

Die in der axialen Richtung geschichteten Bleche dienen zur Führung des magnetischen Flusses in einem Betrieb der elektrischen Maschine. Hierfür geeignete Bleche sind z.B. Elektrobleche.

Der Rotor weist eine entsprechende Einrichtung auf, um über den Luftspalt mit dem Stator magnetisch zusammenwirken zu können. Die Einrichtung kann hierfür einen Permanentmagneten und/oder eine Wicklung aufweisen.

Vorteilhaft weist die elektrische Maschine mehrere Befestigungseinheiten auf, die jeweils in Bereichen in unterschiedlichen radialen Richtungen an dem ersten axialen Ende des Stators vorhanden sind. Hierdurch wird ein vorteilhaftes Zusammenwirken der vorteilhaften Befestigungseinheiten für einen Schutz einer erfindungsgemäßen elektrischen Maschine vor Umwelteinflüssen in einfacher Weise erreicht.

Die Befestigungseinheiten können vorteilhaft in den Bereichen in den unterschiedlichen radialen Richtungen vorhanden sein, bei denen ein Abstand der Ränder der geschichteten Bleche zum Luftspalt größer ist als in anderen Bereichen der geschichteten Bleche. So kann vorteilhaft ein für einen Betrieb der elektrischen Maschine elektromagnetisch wenig genutzter Bereich für die Befestigungseinheiten verwendet werden. So können z.B. bei geschichteten Blechen, die einen eckigen Rand als Begrenzung aufweisen, die Befestigungseinheiten in den Bereichen der Ecken der ersten Druckvorrichtung und der ersten Schutzhaube vorhanden sein, die den Ecken der geschichteten Bleche entsprechen.

Die erste Druckvorrichtung übt eine Druckkraft auf die geschichteten Bleche in der axialen Richtung aus. So wird eine für einen Betrieb der elektrischen Maschine vorteilhafte Anordnung und Form der Bleche erreicht. Für eine entsprechende Druckkraft in der entgegengesetzten axialen Richtung kann der Stator eine zweite Druckvorrichtung aufweisen, die an dem zweiten axialen Ende angeordnet ist.

Die Wicklung kann sich von dem ersten axialen Ende zum zweiten axialen Ende erstrecken, wobei die Wicklung den ersten Wicklungskopf an dem ersten axialen Ende und einen zweiten Wicklungskopf an dem zweiten axialen Ende aufweist. Der zweite Wicklungskopf kann von einer zweiten Schutzhaube umgeben sein, wobei sich die zweite Schutzhaube in der axialen Richtung mindestens von der zweiten Druckvorrichtung bis zu einem zweiten Ende des zweiten Wicklungskopfes erstrecken kann, das der zweiten Druckvorrichtung abgewandt ist. So wird vorteilhaft ein Schutz der Wicklung vor Umwelteinflüssen erreicht, wobei die Wicklung in dem inneren Bereich der elektrischen Maschine vorhanden sein kann.

Die zweite Schutzhaube kann vorteilhaft an der zweiten Druckvorrichtung durch eine weitere Befestigungseinheit, die einen ersten Befestigungsbereich an der zweiten Schutzhaube und einen zweiten Befestigungsbereich an der zweiten Druckvorrichtung aufweist, an einer Anschlussstelle festgelegt befestigt sein.

Die erste Druckvorrichtung kann in der axialen Richtung eine Anordnung einer ersten Druckplatte und einer zweiten Druckplatte aufweisen, wobei die erste Druckplatte näher an dem Blechpaket angeordnet ist als die zweite Druckplatte. Die erste Druckvorrichtung kann so vorteilhaft die Druckkraft beim Einwirken von Umwelteinflüssen aufrechterhalten. Unter anderem vermindert die erste Druckvorrichtung mit der ersten und der zweiten Druckplatte vorteilhaft ein Auffächern der geschichteten Bleche an einem Rand der Druckvorrichtung bzw. der geschichteten Bleche. Bei einem Auffächern der geschichteten Bleche können Umwelteinflüsse sich stärker auf die elektrische Maschine auswirken. So kann z.B. leichter Feuchtigkeit in den Stator und zum Rotor eindringen. Die erste und die zweite Druckplatte können vorteilhaft hergestellt werden, da sie nicht bombiert werden müssen.

Die erste Druckplatte kann sich zumindest teilweise entlang von Zähnen erstrecken, die der Stator aufweist und die sich in den Luftspalt erstrecken. So wird vorteilhaft ein Auffächern der geschichteten Bleche an den Zähnen vermindert. Zumindest einige der Zähne können vorteilhaft einen Teil einer Berandung von Nuten bilden, wobei in den Nuten die Wicklung geführt ist. Bei gleichen Anforderungen an die erste Druckvorrichtung kann diese mit der ersten und der zweiten Druckplatte vorteilhaft einfacher und mit einer höheren Qualität gefertigt werden, als wenn die erste Druckvorrichtung nur eine Druckplatte umfasste. Ausnehmungen, die z.B. zum Ausbilden der Zähne, an der ersten und der zweiten Druckplatte angebracht werden, können vorteilhaft einfacher und mit höherer Genauigkeit hergestellt werden. Dies ist unter anderem deswegen möglich, da die erste und zweite Druckplatte dünner ausgeführt werden können, als bei nur einer Druckplatte bei der Druckvorrichtung. Die erste Druckplatte kann aufgrund der einfacheren und mit höherer Genauigkeit möglichen Herstellung vorteilhaft über mehr als 80% der Länge der Zähne entlang der Zähne in den Luftspalt erstrecken.

Ein erfindungsgemäßer Stator weist den weiteren Vorteil auf, dass er den zweiten Befestigungsbereich der Befestigungseinheit platzsparend und kostengünstig aufweist. So kann vorteilhaft ein erfindungsgemäßer Stator sowohl bei einer elektrischen Maschine, die die erste Schutzhaube aufweist, als auch bei einer elektrischen Maschine, die keine Schutzhaube aufweist, ohne weitere Anpassung verwendet werden.

Ein erfindungsgemäßes Verfahren zur Herstellung eines erfindungsgemäßen Stators weist auch den weiteren Vorteil auf, dass eine einfachere Positionierung und Befestigung der ersten Schutzhaube vorteilhaft möglich ist.

Ein erfindungsgemäßes Verfahren zur Herstellung einer erfindungsgemäßen elektrischen Maschine weist auch den weiteren Vorteil auf, dass die vorteilhafte Befestigungseinheit ein Montieren des Stators in der elektrischen Maschine, insbesondere in einem Gehäuse der elektrischen Maschine, bei allen verschiedenen Kühlarten in geringem Maße behindert.

Unter anderem kann trotz des Vorsehens verschiedenster Kühlvarianten am Stator die erste Schutzhaube so an dem Stator befestigt werden, dass er in der elektrischen Maschine vorteilhaft montiert werden kann.

Vorteilhafte Ausgestaltungen der Erfindung sind in den abhängigen Ansprüchen angegeben.

Die Dichtungsschicht kann auch vorteilhaft ein Material sein, das an der Anschlussstelle den Raum zwischen der ersten Schutzhaube und der ersten Druckvorrichtung in einer axialen Richtung nicht vollständig ausfüllt bzw. nicht mit der geforderten Dichtwirkung. Diese wird bei der Herstellung des Stators nach dem Befestigen der ersten Schutzhaube an der ersten Druckvorrichtung durch einen weiteren Herstellungsschritt erreicht. In diesem weiteren Herstellungsschritt wird in axialer Richtung die Erstreckung des Materials der Dichtungsschicht vergrößert. Das Vergrößern der Erstreckung in axialer Richtung kann durch eine chemische oder physikalische Reaktion des Materials der Dichtungsschicht erfolgen, indem sich in der Dichtungsschicht ein weiteres Material einlagert. So kann die Dichtungsschicht nach der Herstellung eines erfindungsgemäßen Stators ein aufgequollenes Material aufweisen.

Weiterhin vorteilhaft kann die zweite Druckplatte durch die Verbindung, die das erste und das zweite Befestigungselement aufweist, an der ersten Druckvorrichtung befestigt sein. So wird vorteilhaft platzsparend und kostengünstig durch das erste und das zweite Befestigungselement eine Befestigung der zweiten Druckplatte an der ersten Druckplatte erreicht.

In einer weiteren vorteilhaften Ausgestaltung einer erfindungsgemäßen elektrischen Maschine weist das zweite Befestigungselement einen ersten Bereich auf, der formschlüssig zur Vermeidung eines Verdrehens um eine axiale Richtung um mehr als 360° in einer ersten Ausnehmung der ersten Druckvorrichtung angeordnet ist. So wird platzsparend und kostengünstig ein Fixieren des zweiten Befestigungselements gegen das Verdrehen bei der Herstellung eines erfindungsgemäßen Stators bzw. einer erfindungsgemäßen elektrischen Maschine vermieden. So kann in einfacher Weise bei einer erfindungsgemäßen elektrischen Maschine ein Schutz vor Umwelteinflüssen erreicht werden.

Die erste Ausnehmung kann vorteilhaft an der ersten Druckplatte der ersten Druckvorrichtung sein. So wird platzsparend und kostengünstig ein einfaches Einlegen des zweiten Befestigungselementes erreicht und ein Fixieren des zweiten Befestigungselements gegen das Verdrehen bei der Herstellung eines erfindungsgemäßen Stators bzw. einer erfindungsgemäßen elektrischen Maschine vermieden.

In einer weiteren vorteilhaften Ausgestaltung der erfindungsgemäßen elektrischen Maschine ist ein Rand der ersten Druckvorrichtung am zweiten Befestigungsbereich durch eine Ausnehmung an der ersten Druckvorrichtung unterbrochen. So kann vorteilhaft das zweite Befestigungselement am Rand der ersten Druckvorrichtung in der Ausnehmung in einfacher Weise angebracht werden. Vorteilhaft ist durch die Ausnehmung sowohl ein Rand der ersten Druckplatte als auch ein Rand der zweiten Druckplatte unterbrochen.

Vorteilhaft kann die erste Schutzhaube eine Ausnehmung aufweisen, die in einer axialen Richtung die Unterbrechung des Randes der ersten Druckvorrichtung fortgeführt aufweist. Hierdurch kann in einfacherer Weise ein Festlegen und Befestigen der ersten Schutzhaube vorteilhaft erfolgen.

Die Ausnehmung der zweiten Druckplatte kann in einer Richtung senkrecht zu einer axialen Richtung eine geringere Erstreckung als die erste Ausnehmung der ersten Druckplatte aufweisen. So kann vorteilhaft das zweite Befestigungselement vor dem Verbinden mit dem ersten Befestigungselement in einfacher Weise zusätzlich durch ein spielfreies Anordnen des zweiten Befestigungselementes in der Ausnehmung der zweiten Druckplatte gehalten werden.

In der Ausnehmung der zweiten Druckplatte kann das zweite Befestigungselement in einer Richtung senkrecht zu einer axialen Richtung spielfrei angeordnet sein. So kann vorteilhaft das zweite Befestigungselement vor dem Verbinden mit dem ersten Befestigungselement in einfacher Weise zusätzlich durch die spielfreie Anordnung in der Ausnehmung der zweiten Druckplatte gehalten werden.

Bei einer Befestigung der zweiten an der ersten Druckplatte durch das erste und zweite Befestigungselement kann durch die Ausnehmung der zweiten Druckplatte in einfacher Weise eine genauere Anordnung der zweiten Druckplatte relativ zu der ersten Druckplatte erreicht werden.

In der erfindungsgemäßen elektrischen Maschine ist die erste Schutzhaube durch eine Verbindung, die das erste, das zweite und ein drittes Befestigungselement aufweist, an der ersten Druckanordnung befestigt, wobei die Befestigungseinheit das dritte Befestigungselement umfasst. So wird in einfacher Weise eine platzsparende und kostengünstige Befestigungseinheit zum Schutz der elektrischen Maschine vor Umwelteinflüssen erreicht.

In einer weiteren vorteilhaften Ausgestaltung einer erfindungsgemäßen elektrischen Maschine weist die erste Schutzhaube an der Anschlussstelle einen Rand auf, der sich entlang einer dem Luftspalt in radialen Richtungen abgewandten Seite der Wicklung erstreckt und wobei der Rand durch eine Kante der ersten Schutzhaube gebildet ist. So wird vorteilhaft in einfacherer Weise ein Schutz der elektrischen Maschine vor Umwelteinflüssen erreicht, indem die die Kante durch das Zusammenwirken mit der Dichtungsschicht einen vorteilhaften Schutz erreicht. Die Kante der ersten Schutzhaube hat hierzu vorteilhaft in allen radialen und axialen Richtungen eine nahezu gleiche Dicke. Die Dicke kann dadurch gegeben sein, dass sie durch ein scheibenförmiges Material vorteilhaft hergestellt ist.

Es kann die Kante der ersten Schutzhaube vorteilhaft aus einem scheibenförmigen Material durch einfache Prozesse, z.B. durch Biegen oder Kanten, aus einem Blech hergestellt werden. Anschließend kann der erste Befestigungsbereich an der ersten Schutzhaube angebracht werden. Vorteilhaft kann der erste Befestigungsbereich aus einem einfachen Konstruktionselement bestehen, oder ein einfaches Konstruktionselement aufweisen. Das Konstruktionselement kann z.B. eine Bohrung sein oder ein L-Winkel, der eine Ausnehmung aufweist. Die einfachen Konstruktionselemente können in einfacher Weise kostengünstig hergestellt werden.

Das scheibenförmige Material kann ein Blech sein. Die Wärmeleitfähigkeit des Blechs kann so vorteilhaft zur Kühlung der elektrischen Maschine beitragen.

Das scheibenförmige Material kann ein Kunststoff sein. Dies hat den Vorteil, dass die erste Schutzhaube durch kostengünstige Prozesse bei der Kunststoffverarbeitung hergestellt werden kann.

In einer weiteren vorteilhaften Ausgestaltung einer erfindungsgemäßen elektrischen Maschine weist die erste Schutzhaube eine Öffnung auf, aus der Anschlüsse der Wicklung in radialen Richtungen durch die erste Schutzhaube geführt werden können.

In einer weiteren vorteilhaften Ausgestaltung einer erfindungsgemäßen elektrischen Maschine weist das zweite Befestigungselement eine Schraube auf, und das erste Befestigungselement weist eine Mutter auf. So wird vorteilhaft in einfacher Weise durch einfache Konstruktionselemente ein Schutz vor Umwelteinflüssen erreicht, indem das erste Befestigungselement platzsparend und kostengünstig sowohl das zweite Befestigungselement an der ersten Druckvorrichtung befestigt, als auch eine Dicke d der Dichtungsschicht für eine gute Dichtwirkung gegenüber Umwelteinflüssen festlegt.

Vorteilhaft kann eine Schraube-Mutter-Verbindung, die das erste Befestigungselement und das zweite Befestigungselement aufweist, zwischen dem ersten und dem zweiten Befestigungselement durch ein Fixierungselement betriebsfester gemacht werden.

Vorteilhaft kann eine Schraube-Mutter-Verbindung nur aus dem ersten und dem zweiten Befestigungselement gebildet sein, damit durch das erste Befestigungselement vorteilhaft eine Dicke d einer Dichtungsschicht an der Anschlussstelle zwischen der ersten Schutzhaube und der ersten Druckvorrichtung genauer festgelegt ist.

In einer weiteren vorteilhaften Ausgestaltung einer erfindungsgemäßen elektrischen Maschine weist das dritte Befestigungselement eine Mutter auf. So wird vorteilhaft in einfacher Weise durch einfache Konstruktionselemente eine platzsparende und kostengünstige Befestigungseinheit zum Schutz der elektrischen Maschine vor Umwelteinflüssen erreicht.

Vorteilhaft kann eine Schraube-Mutter-Verbindung, die das zweite Befestigungselement und das dritte Befestigungselement aufweist, zwischen dem zweiten und dem dritten Befestigungselement durch ein Fixierungselement betriebsfester gemacht werden.

Vorteilhaft kann das zweite Befestigungselement eine Schraube, das erste Befestigungselement eine Mutter und das dritte Befestigungselement eine Mutter aufweisen, wobei eine Schraube-Mutter-Verbindung die Schraube und die Mutter des ersten Befestigungselementes aufweist und eine Schraube-Mutter-Verbindung die Schraube und die Mutter des dritten Befestigungsmittels aufweisen. Dadurch kann die Befestigungseinheit vorteilhaft platzsparend und kostengünstig sowie schrittweise zusammengesetzt werden, um die erste Schutzhaube an der ersten Druckvorrichtung an einer Anschlussstelle festgelegt zu befestigen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigen:
- FIG 1: ein Ausführungsbeispiel einer elektrischen Maschine,
- FIG 2: ein Ausführungsbeispiel eines Stators, der das Ausführungsbeispiel der elektrischen Maschine aufweist,
- FIG 3: das Ausführungsbeispiel des Stators gemäß FIG 2, wobei eine erste Schutzhaube erfindungsgemäß befestigt ist,
- FIG 4: ein Ausschnitt einer Draufsicht des Ausführungsbeispiels des Stators gemäß der FIG 3 im Bereich einer Befestigungseinheit,
- FIG 5: ein Detail eines Ausführungsbeispiels des Stators, an dem teilweise Herstellungsschritte zum erfindungsgemäßen Befestigen der ersten Schutzhaube durchgeführt sind.

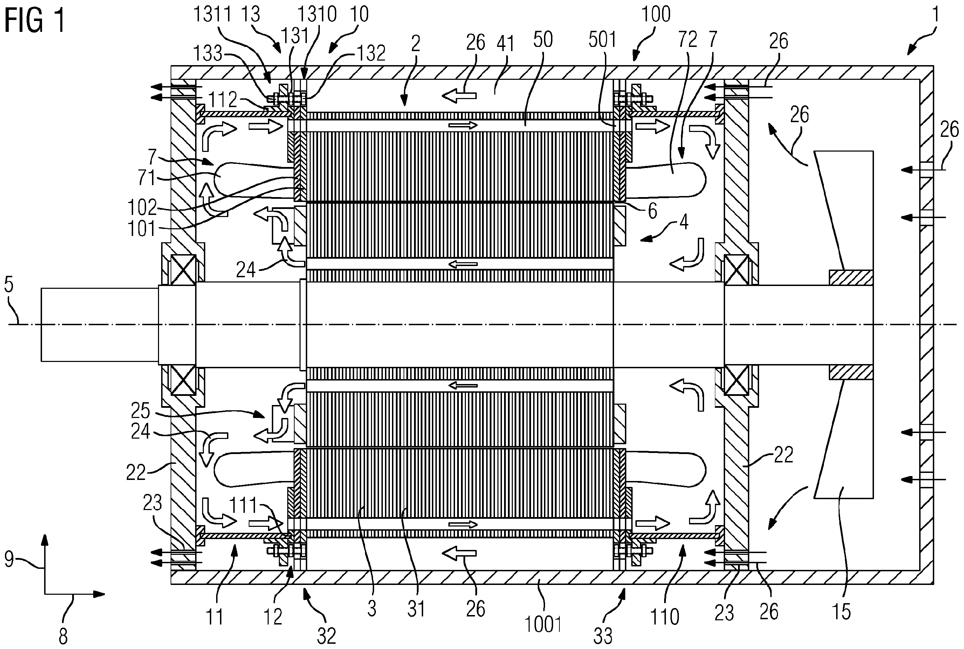

FIG 1 zeigt ein Ausführungsbeispiel einer elektrischen Maschine 1. Die elektrische Maschine 1 umfasst einen Stator 2, der ein Blechpaket 3 aufweist, das in einer axialen Richtung 8 geschichtete Bleche 31 umfasst. Die geschichteten Bleche 31 sind von einem ersten axialen Ende 32 zu einem zweiten axialen Ende 33 angeordnet. Die elektrische Maschine weist einen Rotor 4 auf, der um eine axial verlaufende Drehachse 5 drehbar gelagert ist und in einem Betrieb der elektrischen Maschine 1 über einen Luftspalt 6 mit dem Stator 2 zusammenwirkt. Weiterhin umfasst die elektrische Maschine 1 eine Wicklung 7, die am Luftspalt 6 angeordnet ist, sowie eine erste Schutzhaube 11. Der Luftspalt 6 ist in radialen Richtungen 9, die senkrecht zur axialen Richtung 8 orientiert sind, durch den Stator 2 und den Rotor 4 begrenzt. Der Stator 2 weist eine erste Druckvorrichtung 10 auf, die an dem ersten axialen Ende 32 angeordnet ist. Die erste Schutzhaube 11 ist an der ersten Druckvorrichtung 10 durch eine Befestigungseinheit 13, die einen ersten Befestigungsbereich 1311 an der erste Schutzhaube 11 und einen zweiten Befestigungsbereich 1310 an der ersten Druckvorrichtung 10 aufweist, an einer Anschlussstelle 12 festgelegt befestigt. Die Befestigungseinheit 13 ist in den Bereichen der Ecken der ersten Druckvorrichtung 10 und der ersten Schutzhaube 11 vorhanden, die den Ecken der geschichteten Bleche 31 entsprechen. Die geschichteten Bleche 31 haben eine achteckige Grundform, die aus kurzen und langen äußeren Rändern 301 der geschichteten Bleche 31 gebildet ist. Bei Bereichen, die die kurzen äußeren Ränder 301 aufweisen, ist der Abstand der äußeren Ränder 301 der geschichteten Bleche 31 zum Luftspalt 6 größer ist als in anderen Bereichen der geschichteten Bleche 31.

Die elektrische Maschine 1 weist ein Gehäuse 1001 auf, in dem der Stator 2 angeordnet ist. Die Wicklung 7 weist einen ersten Wicklungskopf 71 auf, den die erste Schutzhaube 11 umgibt, wobei sich die erste Schutzhaube 11 in der axialen Richtung 8 mindestens von der ersten Druckvorrichtung 10 bis zu einem ersten Ende des ersten Wicklungskopfes 71 erstreckt, das der ersten Druckvorrichtung 10 abgewandt ist.

Die erste Druckvorrichtung 10 übt eine Druckkraft auf die geschichteten Bleche 31 in der axialen Richtung 8 aus. Für eine entsprechende Druckkraft in der entgegengesetzten axialen Richtung 8 weist der Stator 2 eine zweite Druckvorrichtung auf, die an dem zweiten axialen Ende 33 angeordnet ist.

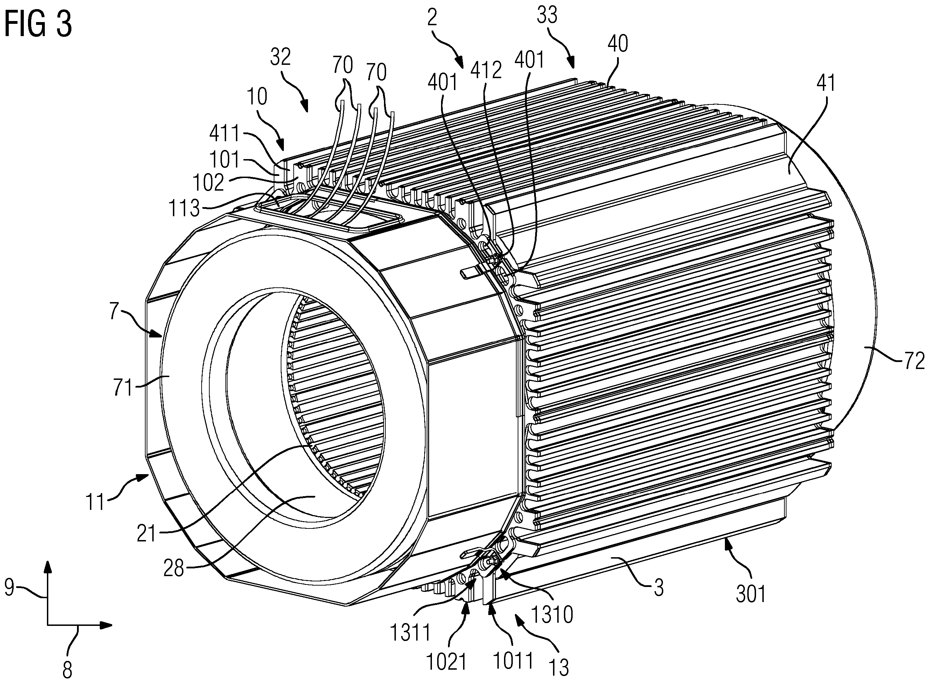

Die Wicklung 7 erstreckt sich von dem ersten axialen Ende 32 zum zweiten axialen Ende 33, wobei die Wicklung 7 den ersten Wicklungskopf 71 an dem ersten axialen Ende 32 und einem zweiten Wicklungskopf 72 an dem zweiten axialen Ende 33 aufweist. Die Wicklung 7 ist in Nuten 21 des Stators 2 geführt. Die Nuten 21 sind in der FIG 3 aufgrund der perspektivischen Ansicht besser zu erkennen.

Das Gehäuse 1001 weist Lagerschilde 22 auf, in denen mittels Wälzlagern eine Welle, auf der der Rotor 4 befestigt ist, drehbar um die axial verlaufende Drehachse 5 gelagert ist. Der Rotor 4 weist Kanäle auf, die in einer axialen Richtung 8 durch den Rotor 4 verlaufen. Der Rotor 4 weist an dem ersten axialen Ende 32 Umlenkeinrichtungen 25 auf.

Vorteilhaft für die Verwendung eines Stators 2 für elektrische Maschinen mit unterschiedlichen Kühlarten weisen das Blechpaket 3 und die erste Druckvorrichtung 10 axiale innere Kanäle 50 auf, deren Öffnungen 501 sich innerhalb eines inneren Bereichs befinden. Der innere Bereich der elektrischen Maschine 1 umfasst den Rotor 4, den ersten Wicklungskopf 71, den zweiten Wicklungskopf 72 und den Stator 2 in seiner radialen Erstreckung bis zu den axialen inneren Kanälen 50. Die axial inneren Kanäle 50 gehören somit noch zum inneren Bereich der elektrischen Maschine 1. Die erste Schutzhaube 11 umgibt den inneren Bereich in einen Abschnitt zwischen einem der Lagerschilde 22 und der ersten Druckvorrichtung 10. So kann ein innerer Kühlmittelstrom 24 durch die inneren Kanäle 50 und den Kanälen des Rotors 4 strömen und geschützt vor Umwelteinflüssen für eine Vergleichmäßigung der Temperatur in einem inneren Bereich der elektrischen Maschine 1 sorgen. Der innere Kühlmittelstrom 24 strömt vorteilhaft teilweise an der ersten Schutzhaube 11 entlang und kann dort vorteilhaft Wärme an einen äußeren Kühlmittelstrom 26 abgeben. Die erste Schutzhaube 11 weist hierzu überwiegend ein scheibenförmiges Material 27 auf. Das scheibenförmige Material 27 wurde durch Biegen und Kanten in eine Form gebracht, so dass das scheibenförmige Material 27 die Wicklungsköpfe 71 an dem ersten axialen Ende 32 umgibt. Vorteilhaft werden der innere Kühlmittelstrom 24 und der äußere Kühlmittelstrom 26 durch das scheibenförmige Material 27 ohne eine merkliche Behinderung der Strömung entlang der axialen Richtung 8 geführt und aufgrund der geringen Dicke des scheibenförmigen Materials kann die Wärme von dem inneren Kühlmittelstrom 24 in gutem Maße auf den äußeren Kühlmittelstrom 26 übertragen werden.

Der äußere Kühlmittelstrom 26 strömt über Öffnungen in das Gehäuse 1001 der elektrischen Maschine 1 und wird dort durch einen Lüfter 15 über Öffnungen eines Lagerschildes 22 entlang der zweiten Schutzhaube 110 bewegt, die wie die erste Schutzhaube 11 ausgeführt ist. Der äußere Kühlmittelstrom 26 strömt anschließend durch axiale äußere Kanäle 40,41, die das Blechpaket 3 und die erste Druckvorrichtung 10 aufweisen, und deren Öffnungen 401,411,412 sich außerhalb des inneren Bereichs befinden. Anschließend strömt der äußere Kühlmittelstrom 26 entlang der ersten Schutzhaube 11 und verlässt über Öffnungen eines Lagerschilds 22 die elektrische Maschine 1. Die axialen äußeren Kanäle 40, 41 sind an den geschichteten Blechen 31 durch Ausnehmungen gebildet, die die äußeren Ränder 301 der geschichteten Bleche 31 unterbrechen.

Die erste Druckvorrichtung 10 weist in der axialen Richtung 8 eine Anordnung einer ersten Druckplatte 101 und einer zweiten Druckplatte 102 auf, wobei die erste Druckplatte 101 näher am Blechpaket 3 angeordnet ist als die zweite Druckplatte 102.

Die Befestigungseinheit 13 weist ein erstes und ein zweites Befestigungselement 131, 132 auf, wobei durch das erste Befestigungselement 131 eine Dicke d einer Dichtungsschicht 14 an der Anschlussstelle 12 zwischen der ersten Schutzhaube 11 und der ersten Druckvorrichtung 10 festgelegt ist und durch eine Verbindung, die durch das erste Befestigungselement 131 und das zweite Befestigungselement 132 gebildet ist, das zweite Befestigungselement 132, das sich entlang einer axialen Richtung 8 erstreckt, an der ersten Druckvorrichtung 10 befestigt ist.

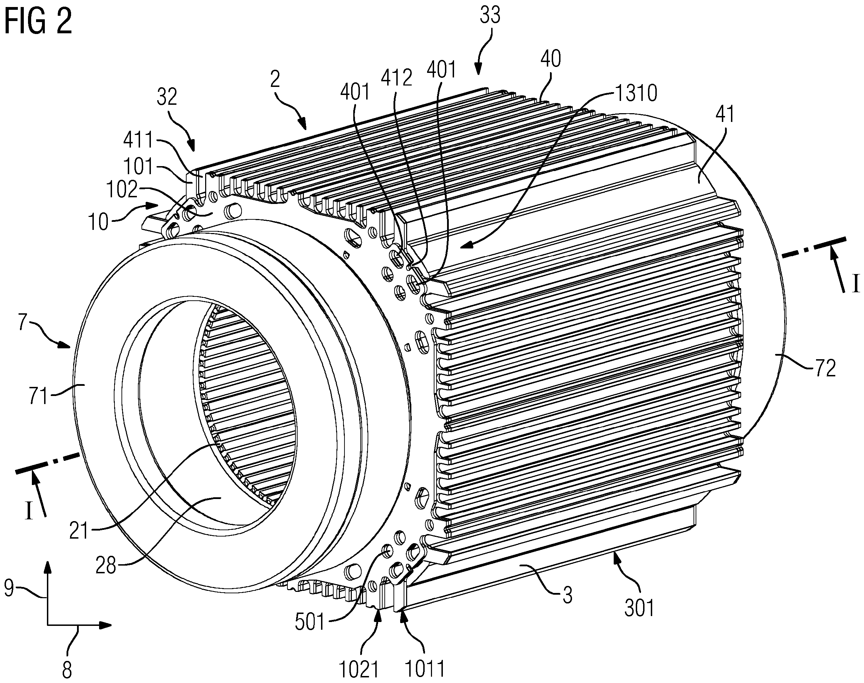

FIG 2 zeigt ein Ausführungsbeispiel eines Stators, den das Ausführungsbeispiel der elektrischen Maschine gemäß FIG 1 aufweist. Der Stator 2 weist ein Blechpaket 3 auf, das in einer axialen Richtung 8 geschichtete Bleche 31 umfasst, die von einem ersten axialen Ende 32 zu einem zweiten axialen Ende 33 angeordnet sind, wobei der Stator 2 eine erste Druckvorrichtung 10 aufweist, die an dem ersten axialen Ende 32 angeordnet ist, und wobei die erste Druckvorrichtung 10 einen zweiten Befestigungsbereich 1310 aufweist. Der Stator 2 ist für die elektrische Maschine 1 der FIG 1, bei der der Stator 2 den Rotor 4 umgibt. Dementsprechend befindet sich die Wicklung 7 überwiegend in einer axialen Bohrung 28 innerhalb des Blechpakets 3.

In dem Ausführungsbeispiel des Stators 2 weist die erste Druckvorrichtung 10 in axialer Richtung 8 eine Anordnung einer ersten Druckplatte 101 und einer zweiten Druckplatte 102 auf, wobei die erste Druckplatte 101 näher am Blechpaket 3 angeordnet ist als die zweite Druckplatte 102. Die erste und die zweite Druckplatte 101, 102 weisen den zweiten Befestigungsbereich in einer der Ecken auf, die den Ecken der geschichteten Bleche 31 entsprechen.

In FIG 2 ist auch zu sehen, dass das Blechpaket 3 und die erste Druckvorrichtung 10 die axialen inneren Kanälen 50 aufweisen, deren Öffnung 501 sich innerhalb des inneren Bereichs der elektrische Maschine 1 befinden. Die erste und die zweite Druckplatte 101,102 weisen die Öffnungen 501, die sich innerhalb des ersten radialen Bereichs befinden, auf.

In FIG 2 zeigt eine strichpunktierte Schnittlinie mit einer Blickrichtung I zur Orientierung zeigen diese in etwa die Schnittlinie und Blickrichtung auf, mit der Stator 2 in FIG 1 dargestellt ist.

Die im Zusammenhang mit der Beschreibung der FIG 2 verwendeten Bezugszeichen, die nicht in FIG 2 vorhanden sind, können entsprechend FIG 1 entnommen werden. Ein erfindungsgemäßer Stator, z.B. das Ausführungsbeispiel des Stators 2 gemäß FIG 2, kann vorteilhaft ohne erste Schutzhaube 11 und ohne zweite Schutzhaube 11 in einer elektrischen Maschine verwendet werden, wenn diese nur eine Schutzart erfüllen muss, die keine erste und zweite Schutzhaube 11, 110 zum Schutz vor Umwelteinflüssen erfordert.

FIG 3 zeigt eine Ansicht des Stators gemäß FIG 2, wobei eine erste Schutzhaube 11 erfindungsgemäß befestigt ist. Die erste Schutzhaube 11 weist eine Öffnung 113 auf, aus der Anschlüsse 70 der Wicklung 7 in radialen Richtungen 9 durch die erste Schutzhaube 11 geführt werden können. Die weiteren Bestandteile des Stators 2 wurden bereits im Zusammenhang mit FIG 2 und FIG 1 beschrieben.

In FIG 3 sind auch die bereits angesprochenen Nuten in der axialen Bohrung 28 zu sehen, in denen die Wicklung 7 geführt ist.

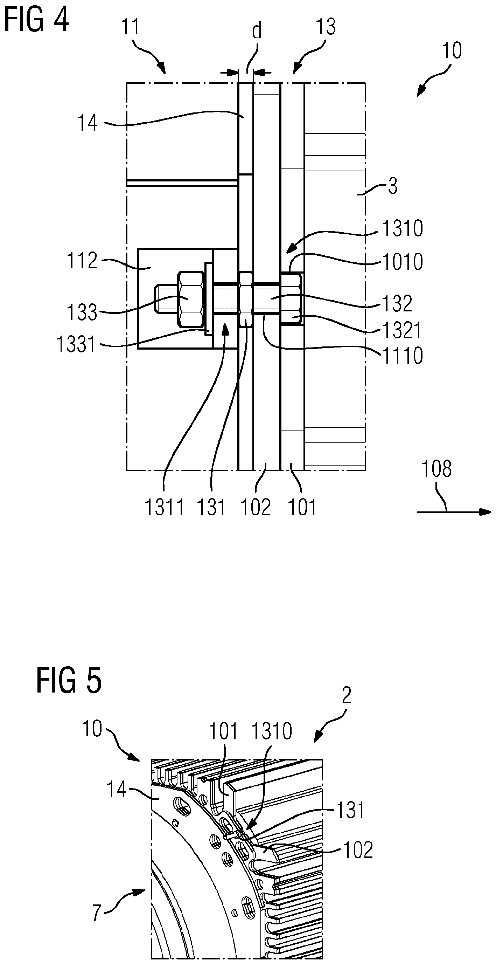

FIG 4 zeigt einen Ausschnitt einer Draufsicht des Ausführungsbeispiels des Stators gemäß der FIG 3 im Bereich der Befestigungseinheit 13. Das zweite Befestigungselement 132 weist einen ersten Bereich 1321 auf, der formschlüssig zur Vermeidung eines Verdrehens um eine axiale Richtung 8 um mehr als 360° in einer ersten Ausnehmung 1010 der ersten Druckvorrichtung 10 angeordnet ist. In dem Ausführungsbeispiel der FIG 4 befindet sich die erste Ausnehmung 1010 an der ersten Druckplatte 101. Das zweite Befestigungselement 132 ist eine Schraube. Der erste Bereich 1321 ist der Kopf der Schraube, der ein Außen-Sechskant-Kopf ist. Ein Rand 1011, 1021 der ersten Druckvorrichtung 10 ist am zweiten Befestigungsbereich 1310 durch Ausnehmung 1110, 1010 an der ersten Druckvorrichtung 10 unterbrochen. Die Ausnehmung 1110, 1010 weist die erste Ausnehmung 1010 an der ersten Druckplatte 101 und eine zweite Ausnehmung 1110 an der zweiten Druckplatte 102 auf. In der zweiten Ausnehmung 1110 der zweiten Druckplatte 102 ist das zweite Befestigungselement 132 in einer Richtung senkrecht zu der axialen Richtung 8 spielfrei angeordnet.

Bei einer erfindungsgemäßen Herstellung des Stators 2 oder der elektrischen Maschine 1 wird das zweite Befestigungsmittel 132 durch eine Verbindung, die durch das erste Befestigungselement 131 und das zweite Befestigungselement 132 gebildet wird, an der ersten Druckvorrichtung 10 befestigt. Anschließend wird die erste Schutzhaube 11 durch eine Verbindung, die das erste, zweite und ein drittes Befestigungselement 131,132,133 aufweist, an der ersten Druckvorrichtung 10 befestigt. Die Befestigungseinheit 13 umfasst das dritte Befestigungselement 133. Durch das erste Befestigungselement 131 ist eine Dicke d einer Dichtungsschicht 14 an der Anschlussstelle 12 zwischen der ersten Schutzhaube 11 und der ersten Druckvorrichtung 10 festgelegt. In dem Ausführungsbeispiel der FIG 4 ist das zweite Befestigungselement 132 eine Schraube, die in dem ersten Bereich 1321 einen Außen-Sechskant-Kopf aufweist. Das erste Befestigungselement 131 und das dritte Befestigungselement 133 sind Muttern. So weist eine Schraube-Mutter-Verbindung das erste Befestigungselement 131 und das zweite Befestigungselement 132 auf. Eine weitere Schraube-Mutter-Verbindung weist das zweite Befestigungselement 132 und das dritte Befestigungselement 133 auf. Die weitere Schraube-Mutter-Verbindung weist einen Federring 1331 als Fixierungselement auf. So wird die weitere Schraube-Mutter-Verbindung durch das zweite und dritte Befestigungselement 132, 133 und den Federring 1331 gebildet. Der Federring 1331 wird im Ausführungsbeispiel der FIG 4 für eine zusätzliche Sicherung der Schraube-Mutter-Verbindung verwendet. Die beiden Schraube-Mutter-Verbindungen können so weitere Elemente aufweisen, solange von den prinzipiellen erfindungsgemäßen Merkmalen nicht abgewichen wird.

Die erste Schutzhaube 11 weist eine Ausnehmung in einem Befestigungsstück 112 auf, in der das zweite Befestigungsmittel 132 in einer Richtung senkrecht zu einer axialen Richtung 8 spielfrei angeordnet ist. Das Befestigungsstück 112 ist stoffschlüssig mit einem Schweißverfahren an der ersten Schutzhaube 11 befestigt.

FIG 5 zeigt ein Detail eines Ausführungsbeispiels des Stators 2 nach einem erfindungsgemäßen Herstellungsschritt vor dem Befestigen der ersten Schutzhaube 11. Nachdem durch die Verbindung, die durch das erste und zweite Befestigungselement 131,132 gebildet ist, das zweite Befestigungselement 132 an der Druckvorrichtung 10 befestigt worden war, wird eine Dichtungsschicht 14 an der ersten Druckvorrichtung 10 angeordnet. Nach diesem Herstellungsschritt liegt ein Stator vor, wie er in FIG 5 gezeigt ist. Die Dichtungsschicht weist einen Gummi auf. Die erfindungsgemäße Festlegung der Dicke d der Dichtungsschicht 14 durch das erste Befestigungselement 131 ermöglicht aber auch die Verwendung einer Dichtungsschicht 14, die in axialer Richtung 8 eine Vergrößerung der Erstreckung des Materials der Dichtungsschicht 14 durch eine chemische oder physikalische Reaktion des Materials ermöglicht. In einem Ausführungsbeispiel weist die Dichtungsschicht 14 einen Filz auf, der in einem weiteren Herstellungsschritt eines erfindungsgemäßen Stators 2 oder einer erfindungsgemäßen elektrischen Maschine 1 durch Einwirken eines flüssigen Stoffs auf den Filz aufquillt.

## Patentansprüche

1. Elektrische Maschine (1) umfassend
- einen Stator (2), der ein Blechpaket (3) aufweist, das in einer axialen Richtung (8) geschichtete Bleche (31) umfasst, die von einem ersten axialen Ende (32) zu einem zweiten axialen Ende (33) angeordnet sind,
- einen Rotor (4), der um eine axial verlaufende Drehachse (5) drehbar gelagert ist und in einem Betrieb der elektrischen Maschine (1) über einen Luftspalt (6) mit dem Stator (2) zusammenwirkt,
- eine Wicklung (7), die am Luftspalt (6) angeordnet ist, und
- eine erste Schutzhaube (11),
- wobei der Luftspalt (6) in radialen Richtungen (9), die senkrecht zur axialen Richtung (8) orientiert sind, durch den Stator (2) und den Rotor (4) begrenzt ist,
- wobei der Stator (2) eine erste Druckvorrichtung (10) aufweist, die an dem ersten axialen Ende (32) angeordnet ist,
wobei die erste Schutzhaube (11) an der ersten Druckvorrichtung (10) durch eine Befestigungseinheit (13), die einen ersten Befestigungsbereich (1311) an der ersten Schutzhaube (11) und einen zweiten Befestigungsbereich (1310) an der ersten Druckvorrichtung (10) aufweist, an einer Anschlussstelle (12) festgelegt befestigt ist,
**dadurch gekennzeichnet, dass** die Befestigungseinheit (13) ein erstes Befestigungselement (131) und ein zweites Befestigungselement (132) aufweist, wobei eine Dichtungsschicht (14) zwischen der ersten Schutzhaube (11) und der ersten Druckvorrichtung (10) vorgesehen ist, wobei durch das erste Befestigungselement (131) eine Dicke (d) der Dichtungsschicht (14) an der Anschlussstelle (12) zwischen der ersten Schutzhaube (11) und der ersten Druckvorrichtung (10) festgelegt ist und durch eine Verbindung, die das erste Befestigungselement (131) und das zweite Befestigungselement (132) aufweist, das zweite Befestigungselement (132), das sich entlang einer axialen Richtung (8) erstreckt, an der ersten Druckvorrichtung (10) befestigt ist, wobei die erste Schutzhaube (11) durch eine Verbindung, die das erste Befestigungselement (131), das zweite Befestigungselement (132), und ein drittes Befestigungselement (133) aufweist, an der ersten Druckvorrichtung (10) befestigt ist, wobei die Befestigungseinheit (13) das dritte Befestigungselement (133) umfasst.

2. Elektrische Maschine (1) nach Anspruch 1,
wobei das zweite Befestigungselement (132) einen ersten Bereich (1321) aufweist, der formschlüssig zu einer Vermeidung eines Verdrehens um eine axiale Richtung (8) um mehr als 360° in einer ersten Ausnehmung (1010) der ersten Druckvorrichtung (10) angeordnet ist.

3. Elektrische Maschine (1) nach einem der vorhergehenden Ansprüche, wobei ein Rand (1011, 1021) der ersten Druckvorrichtung (10) am zweiten Befestigungsbereich (1310) durch eine Ausnehmung (1110, 1010) an der ersten Druckvorrichtung (10) unterbrochen ist.

4. Elektrische Maschine (1) nach einem der vorhergehenden Ansprüche, wobei die erste Schutzhaube (11) an der Anschlussstelle (12) einen Rand aufweist, der sich entlang einer dem Luftspalt (6) in radialen Richtungen (9) abgewandten Seite der Wicklung (7) erstreckt und der Rand durch eine Kante (111) der ersten Schutzhaube (11) gebildet ist.

5. Elektrische Maschine (1) nach einem der vorhergehenden Ansprüche, wobei die erste Schutzhaube (11) eine Öffnung (113) aufweist, aus der Anschlüsse (70) der Wicklung (7) in radialen Richtungen (9) durch die erste Schutzhaube (11) geführt werden können.

6. Elektrische Maschine (1) nach einem der vorhergehenden Ansprüche, wobei die Dichtungsschicht (14) flexibel ist und an der ersten Druckvorrichtung (10) anliegt.

7. Elektrische Maschine (1) nach einem der vorhergehenden Ansprüche, wobei die Dichtungsschicht (14) einen Gummi aufweist.

8. Elektrische Maschine (1) nach einem der Ansprüche 1 bis 5, wobei die Dichtungsschicht (14) ein aufgequollenes Material aufweist.

9. Elektrische Maschine (1) nach Anspruch 8, wobei die Dichtungsschicht (14) bei einer Herstellung des Stators (2) ein Material ist, das an der Anschlussstelle (12) den Raum zwischen der ersten Schutzhaube (11) und der ersten Druckvorrichtung (10) in einer axialen Richtung (8) nicht vollständig ausfüllt bzw. nicht mit der geforderten Dichtwirkung, wobei die Erstreckung des Materials der Dichtungsschicht (14) durch eine chemische oder physikalische Reaktion des Materials der Dichtungsschicht (14) vergrößert ist, indem durch einen weiteren Herstellungsschritt bei der Herstellung des Stators (2) nach dem Befestigen der ersten Schutzhaube (11) an der ersten Druckvorrichtung (10) in der Dichtungsschicht (14) ein weiteres Material zur Vergrößerung der Erstreckung des Materials in axialer Richtung (8) eingelagert ist.

10. Elektrische Maschine (1) nach einem der vorhergehenden Ansprüche, wobei das zweite Befestigungselement (132) eine Schraube und das erste Befestigungselement (131) eine Mutter aufweist.

11. Elektrische Maschine (1) nach einem der der vorhergehenden Ansprüche, wobei das dritte Befestigungselement (133) eine Mutter aufweist.

12. Stator (2) für eine elektrische Maschine (1) nach einem der vorhergehenden Ansprüche, bei der der Luftspalt (6) in radialen Richtungen (9), die senkrecht zur axialen Richtung (8) orientiert sind, durch den Stator (2) und den Rotor (4) begrenzt ist und die die Wicklung (7), die am Luftspalt (6) angeordnet ist, und den Rotor (4) umfasst, der um die axial verlaufende Drehachse (5) drehbar gelagert ist und in dem Betrieb der elektrischen Maschine (1) über den Luftspalt (6) mit dem Stator (2) zusammenwirkt,
- wobei der Stator (2) das Blechpaket (3) aufweist, das in der axialen Richtung (8) geschichtete Bleche (31) umfasst, die von dem ersten axialen Ende (32) zu dem zweiten axialen Ende (33) angeordnet sind,
- wobei der Stator (2) die erste Druckvorrichtung (10) aufweist, die an dem ersten axialen Ende (32) angeordnet ist,
wobei die erste Schutzhaube (11) an der ersten Druckvorrichtung (10) durch die Befestigungseinheit (13), die den ersten Befestigungsbereich (1311) an der ersten Schutzhaube (11) und den zweiten Befestigungsbereich (1310) an der ersten Druckvorrichtung (10) aufweist, an der Anschlussstelle (12) festgelegt befestigt ist, wobei die erste Druckvorrichtung (10) den zweiten Befestigungsbereich (1310) aufweist, wobei die Befestigungseinheit (13) ein erstes Befestigungselement (131) und ein zweites Befestigungselement (132) aufweist, wobei eine Dichtungsschicht (14) zwischen der ersten Schutzhaube (11) und der ersten Druckvorrichtung (10) vorgesehen ist, wobei durch das erste Befestigungselement (131) eine Dicke (d) der Dichtungsschicht (14) an der Anschlussstelle (12) zwischen der ersten Schutzhaube (11) und der ersten Druckvorrichtung (10) festgelegt ist und durch eine Verbindung, die das erste Befestigungselement (131) und das zweite Befestigungselement (132) aufweist, das zweite Befestigungselement (132), das sich entlang einer axialen Richtung (8) erstreckt, an der ersten Druckvorrichtung (10) befestigt ist, wobei die erste Schutzhaube (11) durch eine Verbindung, die das erste Befestigungselement (131), das zweite Befestigungselement (132), und ein drittes Befestigungselement (133) aufweist, an der ersten Druckvorrichtung (10) befestigt ist, wobei die Befestigungseinheit (13) das dritte Befestigungselement (133) umfasst.

13. Verfahren zur Herstellung eines Stators nach Anspruch 12 für eine elektrische Maschine nach einem der Ansprüche 1 bis 11, bei der der Luftspalt (6) in radialen Richtungen (9), die senkrecht zur axialen Richtung (8) orientiert sind, durch den Stator (2) und den Rotor (4) begrenzt ist und die die Wicklung (7), die am Luftspalt (6) angeordnet ist, und den Rotor (4) umfasst, der um die axial verlaufende Drehachse (5) drehbar gelagert ist und in dem Betrieb der elektrischen Maschine (1) über den Luftspalt (6) mit dem Stator (2) zusammenwirkt,
- wobei der Stator (2) das Blechpaket (3) aufweist, das in der axialen Richtung (8) geschichtete Bleche (31) umfasst, die von dem ersten axialen Ende (32) zu dem zweiten axialen Ende (33) angeordnet sind,
- wobei der Stator (2) die erste Druckvorrichtung (10) aufweist, die an dem ersten axialen Ende (32) angeordnet ist,
wobei eine erste Schutzhaube (11) vorgesehen wird, wobei die erste Schutzhaube (11) an der ersten Druckvorrichtung (10) durch eine Befestigungseinheit (13), die einen ersten Befestigungsbereich (1311) an der ersten Schutzhaube (11) und einen zweiten Befestigungsbereich (1310) an der ersten Druckvorrichtung (10) aufweist, an einer Anschlussstelle (12) festgelegt befestigt wird,
wobei vor dem Befestigen der ersten Schutzhaube (11), nachdem durch die Verbindung, die durch das erste und zweite Befestigungselement (131,132) gebildet ist, das zweite Befestigungselement (132), das sich entlang einer axialen Richtung (8) erstreckt, an der Druckvorrichtung (10) befestigt worden war, die Dichtungsschicht (14) an der ersten Druckvorrichtung (1) angeordnet wird,
wobei die erste Schutzhaube (11) durch eine Verbindung, die das erste Befestigungselement (131), das zweite Befestigungselement (132), und ein drittes Befestigungselement (133) aufweist, an der ersten Druckvorrichtung (10) befestigt wird, wobei die Befestigungseinheit (13) das dritte Befestigungselement (133) umfasst und das erste Befestigungselement (131) eine Dicke (d) der Dichtungsschicht (14) an der Anschlussstelle (12) zwischen der ersten Schutzhaube (11) und der ersten Druckvorrichtung (10) festlegt.

14. Verfahren zur Herstellung einer elektrischen Maschine (1) nach einem der Ansprüche 1 bis 11, bei der der Luftspalt (6) in radialen Richtungen (9), die senkrecht zur axialen Richtung (8) orientiert sind, durch den Stator (2) und den Rotor (4) begrenzt ist und die die Wicklung (7), die am Luftspalt (6) angeordnet ist, und den Rotor (4) umfasst, der um die axial verlaufende Drehachse (5) drehbar gelagert ist und in dem Betrieb der elektrischen Maschine (1) über den Luftspalt (6) mit dem Stator (2) zusammenwirkt,
- wobei der Stator (2) das Blechpaket (3) aufweist, das in der axialen Richtung (8) geschichtete Bleche (31) umfasst, die von dem ersten axialen Ende (32) zu dem zweiten axialen Ende (33) angeordnet sind,
- wobei der Stator (2) die erste Druckvorrichtung (10) aufweist, die an dem ersten axialen Ende (32) angeordnet ist,
wobei eine erste Schutzhaube (11) vorgesehen wird, wobei die erste Schutzhaube (11) an der ersten Druckvorrichtung (10) durch eine Befestigungseinheit (13), die einen ersten Befestigungsbereich (1311) an der ersten Schutzhaube (11) und einen zweiten Befestigungsbereich (1310) an der ersten Druckvorrichtung (10) aufweist, an einer Anschlussstelle (13) festgelegt befestigt wird,
wobei vor dem Befestigen der ersten Schutzhaube (11), nachdem durch die Verbindung, die durch das erste und zweite Befestigungselement (131,132) gebildet ist, das zweite Befestigungselement (132), das sich entlang einer axialen Richtung (8) erstreckt, an der Druckvorrichtung (10) befestigt worden war, die Dichtungsschicht (14) an der ersten Druckvorrichtung (1) angeordnet wird,
wobei die erste Schutzhaube (11) durch eine Verbindung, die das erste Befestigungselement (131), das zweite Befestigungselement (132), und ein drittes Befestigungselement (133) aufweist, an der ersten Druckvorrichtung (10) befestigt wird, wobei der Stator (2) in der elektrischen Maschine (1) montiert wird, wobei die Befestigungseinheit (13) das dritte Befestigungselement (133) umfasst und das erste Befestigungselement (131) eine Dicke (d) der Dichtungsschicht (14) an der Anschlussstelle (12) zwischen der ersten Schutzhaube (11) und der ersten Druckvorrichtung (10) festlegt.

## Claims

1. Electrical machine (1) comprising
- a stator (2) having a laminated core (3) which comprises sheets (31) which are stacked in an axial direction (8) and are arranged from a first axial end (32) to a second axial end (33),
- a rotor (4) which is rotatably mounted around an axially extending axis of rotation (5) and interacts with the stator (2) across an air gap (6) during operation of the electrical machine (1),
- a winding (7) which is arranged at the air gap (6), and
- a first protective hood (11),
- wherein the air gap (6) is bounded by the stator (2) and the rotor (4) in radial directions (9) which are oriented normal to the axial direction (8),
- wherein the stator (2) has a first pressure device (10) which is arranged at the first axial end (32),
wherein the first protective hood (11) is fixedly fastened to the first pressure device (10) at a connecting point (12) by means of a fastening unit (13) which has a first fastening area (1311) on the first protective hood (11) and a second fastening area (1310) on the first pressure device (10),
**characterised in that**
the fastening unit (13) has a first fastening element (131) and a second fastening element (132), wherein a sealing layer (14) is provided between the first protective hood (11) and the first pressure device (10), wherein a thickness (d) of the sealing layer (14) at the connecting point (12) between the first protective hood (11) and the first pressure device (10) is specified by means of the first fastening element (131), and the second fastening element (132), which extends along an axial direction (8), is fastened to the first pressure device (10) by means of a connection which has the first fastening element (131) and the second fastening element (132), wherein the first protective hood (11) is fastened to the first pressure device (10) by means of a connection which has the first fastening element (131), the second fastening element (132) and a third fastening element (133), wherein the fastening unit (13) comprises the third fastening element (133) .

2. Electrical machine (1) according to claim 1,
wherein the second fastening element (132) has a first region (1321) which is arranged in a form-fitting manner in a first recess (1010) of the first pressure device (10) in order to avoid a twisting around an axial direction (8) by more than 360°.

3. Electrical machine (1) according to one of the preceding claims, wherein an edge (1011, 1021) of the first pressure device (10) is interrupted at the second fastening area (1310) by a recess (1110, 1010) on the first pressure device (10).

4. Electrical machine (1) according to one of the preceding claims, wherein the first protective hood (11) has an edge at the connecting point (12), which edge extends along a side of the winding (7) facing away from the air gap (6) in radial directions (9), and wherein the edge is formed by a rim (111) of the first protective hood (11).

5. Electrical machine (1) according to one of the preceding claims, wherein the first protective hood (11) has an opening (113) from which connecting leads (70) of the winding (7) can be conducted in radial directions (9) through the first protective hood (11).

6. Electrical machine (1) according to one of the preceding claims, wherein the sealing layer (14) is flexible and butts against the first pressure device (10).

7. Electrical machine (1) according to one of the preceding claims, wherein the sealing layer (14) contains a rubber material.

8. Electrical machine (1) according to one of claims 1 to 5, wherein the sealing layer (14) has a swollen material.

9. Electrical machine (1) according to claim 8, wherein during a production of the stator (2) the sealing layer (14) is a material which does not completely fill out the space between the first protective hood (11) and the first pressure device (10) in an axial direction (8) at the connecting point (12) or not with the required sealing effect, wherein the degree to which the material of the sealing layer (14) extends is increased by means of a chemical or physical reaction of the material of the sealing layer (14) in that by means of a further production step during the production of the stator (2) after the first protective hood (11) has been fastened to the first pressure device (10) a further material is deposited in the sealing layer (14) in order to increase the degree to which the material extends in the axial direction (8).

10. Electrical machine (1) according to one of the preceding claims, wherein the second fastening element (132) has a bolt and the first fastening element (131) has a nut.

11. Electrical machine (1) according to one of the preceding claims, wherein the third fastening element (133) has a nut.

12. Stator (2) for an electrical machine (1) according to one of the preceding claims, in which the air gap (6) is bounded by the stator (2) and the rotor (4) in radial directions (9) which are oriented normal to the axial direction (8) and which comprises the winding (7), which is arranged at the air gap (6), and the rotor (4), which is rotatably mounted around the axially extending axis of rotation (5) and interacts with the stator (2) across the air gap (6) during the operation of the electrical machine (1),
- wherein the stator (2) has the laminated core (3) which comprises sheets (31) which are stacked in the axial direction (8) and are arranged from the first axial end (32) to the second axial end (33),
- wherein the stator (2) has the first pressure device (10), which is arranged at the first axial end (32),
wherein the first protective hood (11) is fixedly fastened to the first pressure device (10) at the connecting point (12) by means of the fastening unit (13) which has the first fastening area (1311) on the first protective hood (11) and the second fastening area (1310) on the first pressure device (10), wherein the first pressure device (10) has the second fastening area (1310), wherein the fastening unit (13) has a first fastening element (131) and a second fastening element (132), wherein a sealing layer (14) is provided between the first protective hood (11) and the first pressure device (10), wherein a thickness (d) of the sealing layer (14) at the connecting point (12) between the first protective hood (11) and the first pressure device (10) is specified by means of the first fastening element (131), and the second fastening element (132), which extends along an axial direction (8), is fastened to the first pressure device (10) by means of a connection which has the first fastening element (131) and the second fastening element (132), wherein the first protective hood (11) is fastened to the first pressure device (10) by means of a connection which has the first fastening element (131), the second fastening element (132) and a third fastening element (133), wherein the fastening unit (13) comprises the third fastening element (133).

13. Method for producing a stator according to claim 12 for an electrical machine according to one of claims 1 to 11, in which the air gap (6) is bounded by the stator (2) and the rotor (4) in radial directions (9) which are oriented normal to the axial direction (8) and which comprises the winding (7), which is arranged at the air gap (6), and the rotor (4), which is rotatably mounted around the axially extending axis of rotation (5) and interacts with the stator (2) across the air gap (6) during the operation of the electrical machine (1),
- wherein the stator (2) has the laminated core (3) which comprises sheets (31) which are stacked in the axial direction (8) and are arranged from the first axial end (32) to the second axial end (33),
- wherein the stator (2) has the first pressure device (10), which is arranged at the first axial end (32),
wherein a first protective hood (11) is provided, wherein the first protective hood (11) is fixedly fastened to the first pressure device (10) at a connecting point (12) by means of a fastening unit (13) which has a first fastening area (1311) on the first protective hood (11) and a second fastening area (1310) on the first pressure device (10),
wherein the sealing layer (14) is arranged on the first pressure device (1) prior to the fastening of the first protective hood (11), after the second fastening element (132), which extends along an axial direction (8), had been fastened to the pressure device (10) by means of the connection formed by the first and second fastening element (131,132),
wherein the first protective hood (11) is fastened to the first pressure device (10) by means of a connection which has the first fastening element (131), the second fastening element (132) and a third fastening element (133), wherein the fastening unit (13) comprises the third fastening element (133) and the first fastening element (131) specifies a thickness (d) of the sealing layer (14) at the connecting point (12) between the first protective hood (11) and the first pressure device (10).

14. Method for producing an electrical machine (1) according to one of claims 1 to 11, in which the air gap (6) is bounded by the stator (2) and the rotor (4) in radial directions (9) which are oriented normal to the axial direction (8) and which comprises the winding (7), which is arranged at the air gap (6), and the rotor (4), which is rotatably mounted around the axially extending axis of rotation (5) and interacts with the stator (2) across the air gap (6) during the operation of the electrical machine (1),
- wherein the stator (2) has the laminated core (3) which comprises sheets (31) which are stacked in the axial direction (8) and are arranged from the first axial end (32) to the second axial end (33),
- wherein the stator (2) has the first pressure device (10), which is arranged at the first axial end (32),
wherein a first protective hood (11) is provided, wherein the first protective hood (11) is fixedly fastened to the first pressure device (10) at a connecting point (13) by means of a fastening unit (13) which has a first fastening area (1311) on the first protective hood (11) and a second fastening area (1310) on the first pressure device (10),
wherein the sealing layer (14) is arranged on the first pressure device (1) prior to the fastening of the first protective hood (11), after the second fastening element (132), which extends along an axial direction (8), had been fastened to the pressure device (10) by means of the connection formed by the first and second fastening element (131,132),
wherein the first protective hood (11) is fastened to the first pressure device (10) by means of a connection which has the first fastening element (131), the second fastening element (132) and a third fastening element (133),
wherein the stator (2) is mounted in the electrical machine (1), wherein the fastening unit (13) comprises the third fastening element (133) and the first fastening element (131) specifies a thickness (d) of the sealing layer (14) at the connecting point (12) between the first protective hood (11) and the first pressure device (10).

## Revendications

1. Machine (1) électrique, comprenant
- un stator (2), qui a un paquet (3) de tôles, comprenant des tôles (31), qui sont feuilletées dans une direction (8) axiale et qui sont disposées d'une première extrémité (32) axiale à une seconde extrémité (33) axiale,
- un rotor (4), qui est monté tournant autour d'un axe (5) de rotation s'étendant axialement et qui, lorsque la machine (1) électrique est en fonctionnement, coopère avec le stator (2) par un entrefer (6),
- un enroulement (7), qui est disposé sur l'entrefer (6), et
- un premier capot (11) de protection,
- dans lequel l'entrefer (6) est délimité dans des directions (9) radiales, qui sont orientées perpendiculairement à la direction (8) axiale, par le stator (2) et par le rotor (4),
- dans lequel le stator (2) a un premier système (10) de poussée, qui est disposé sur la première extrémité (32) axiale,
le premier capot (11) de protection étant fixé en étant mis en un point (12) de connexion par une unité (13) de fixation, qui a une première partie (1311) de fixation sur le premier capot (11) de protection et une deuxième partie (1310) de fixation sur le premier système (10) de poussée, **caractérisée en ce que** l'unité (13) de fixation a un premier élément (131) de fixation et un deuxième élément (132) de fixation, une couche (14) d'étanchéité étant prévue entre le premier capot (11) de protection et le premier système (10) de poussée, dans laquelle, par le premier élément (131) de fixation, il est fixée une épaisseur (d) de la couche (14) d'étanchéité au point (12) de connexion entre le premier capot (11) de protection et le premier système (10) de poussée et par une liaison, qui a le premier élément (131) de fixation et le deuxième élément (132) de fixation, le deuxième élément (132) de fixation, qui s'étend suivant une direction (8) axiale, est fixé au premier dispositif (10) de poussée, le premier capot (11) de protection étant fixé au premier système (10) de poussée par une liaison, qui a le premier élément (131) de fixation, le deuxième élément (132) de fixation et un troisième élément (133) de fixation, l'unité (13) de fixation comprenant le troisième élément (133) de fixation.

2. Machine (1) électrique suivant la revendication 1,
dans laquelle le deuxième élément (132) de fixation a une première partie (1321), qui est disposée, à complémentarité de forme pour éviter une rotation, autour d'une direction (8) axiale de plus de 360° dans un premier évidement (1010) du premier système (10) de poussée.

3. Machine (1) électrique suivant l'une des revendications précédentes, dans laquelle un bord (1011, 1021) du premier système (10) de poussée est interrompu à la deuxième partie (1310) de fixation par un évidement (1110, 1010) du premier système (10) de poussée.

4. Machine (1) électrique suivant l'une des revendications précédentes, dans laquelle le premier capot (11) de protection a, au point (12) de connexion, un bord, qui s'étend le long d'un côté de l'enroulement (7), loin de l'entrefer (6) dans des directions (9) radiales, et le bord est formé par une arête (111) du premier capot (11) de protection.

5. Machine (1) électrique suivant l'une des revendications précédentes, dans laquelle le premier capot (11) de protection a une ouverture (113), de laquelle des bornes (70) de l'enroulement (7) peuvent être guidées dans des directions (9) radiales par le premier capot (11) de protection.

6. Machine (1) électrique suivant l'une des revendications précédentes, dans laquelle la couche (14) d'étanchéité est souple et s'applique au premier système (10) de poussée.

7. Machine (1) électrique suivant l'une des revendications précédentes, dans laquelle la couche (14) d'étanchéité a un caoutchouc.

8. Machine (1) électrique suivant l'une des revendications 1 à 5, dans laquelle la couche (14) d'étanchéité a un matériau boursouflé.

9. Machine (1) électrique suivant la revendication 8, dans laquelle la couche (14) d'étanchéité est, lors d'une fabrication du stator (1), un matériau, qui, au point (12) de connexion, ne remplit pas complètement, dans une direction (8) axiale, l'espace compris entre le premier capot (11) de protection et le premier système (10) de poussée ou ne le fait pas avec l'effet d'étanchéité exigée, l'étendue du matériau de la couche (14) d'étanchéité étant agrandie par une réaction chimique ou physique du matériau de la couche (14) d'étanchéité par le fait que, par un autre stade de fabrication, lors de la fabrication du stator (2), après la fixation du premier capot (11) de protection au premier système (10) de poussée, il est incorporé à la couche (14) d'étanchéité un autre matériau pour agrandir l'étendue du matériau dans la direction (8) axiale.

10. Machine (1) électrique suivant l'une des revendications précédentes, dans laquelle le deuxième élément (132) de fixation a une vis et le premier élément (131) de fixation a un écrou.

11. Machine (1) électrique suivant l'une des revendications précédentes, dans laquelle le troisième élément (133) de fixation a un écrou.

12. Stator (2) d'une machine (1) électrique suivant l'une des revendications précédentes, dans lequel l'entrefer (6) est délimité dans des directions (9) radiales, qui sont orientées perpendiculairement à la direction (8) axiale, par le stator (2) et le rotor (4) et qui comprend l'enroulement (7), qui est disposé à l'entrefer (6), et le rotor (4), qui est monté tournant autour de l'axe (5) de rotation s'étendant axialement et coopère, lorsque la machine (1) électrique est en fonctionnement, avec le stator (2) par l'intermédiaire de l'entrefer (6),
- dans lequel le stator (2) a le paquet (3) de tôles, comprenant des tôles (31), qui sont feuilletées dans une direction (8) axiale et qui sont disposées d'une première extrémité (32) axiale à une seconde extrémité (33) axiale,
- dans lequel le stator (2) a le premier système (10) de poussée, qui est disposé sur la première extrémité (32) axiale,
le premier capot (11) de protection étant fixé en étant mis en un point (12) de connexion par l'unité (13) de fixation, qui a une première partie (1311) de fixation sur le premier capot (11) de protection et une deuxième partie (1310) de fixation sur le premier système (10) de poussée, dans lequel le premier système (10) de poussée a la deuxième partie (1310) de fixation, dans lequel l'unité (13) de fixation a un premier élément (131) de fixation et un deuxième élément (132) de fixation, dans lequel une couche (14) d'étanchéité est prévue entre le premier capot (11) de protection et le premier système (10) de poussée, dans lequel, par le premier élément (131) de fixation, il est fixée une épaisseur (d) de la couche (14) d'étanchéité au point (12) de connexion entre le premier capot (11) de protection et le premier système (10) de poussée et par une liaison, qui a le premier élément (131) de fixation et le deuxième élément (132) de fixation, le deuxième élément (132) de fixation, qui s'étend suivant une direction (8) axiale, est fixé au premier dispositif (10) de poussée, le premier capot (11) de protection étant fixé au premier système (10) de poussée par une liaison, qui a le premier élément (131) de fixation, le deuxième élément (132) de fixation et un troisième élément (133) de fixation, l'unité (13) de fixation comprenant le troisième élément (133) de fixation.

13. Procédé de fabrication d'un stator suivant la revendication 12 d'une machine électrique suivant l'une des revendications 1 à 11, dans lequel l'entrefer (6) est délimité dans des directions (9) radiales, qui sont orientées perpendiculairement à la direction (8) axiale, par le stator (2) et par le rotor (4) et qui comprend l'enroulement (7), qui est disposé à l'entrefer (6), et le rotor (4), qui est monté tournant autour de l'axe (5) de rotation s'étendant axialement et coopère, lorsque la machine (1) électrique est en fonctionnement, avec le stator (2) par l'intermédiaire de l'entrefer (6),
- dans lequel le stator (2) a le paquet (3) de tôles, qui comprend des tôles (31), qui sont feuilletées dans la direction (8) axiale et qui sont disposées de la première extrémité (32) axiale à la seconde extrémité (33) axiale,
- dans lequel le stator (2) a le premier système (10) de poussée, qui est disposé sur la première extrémité (32) axiale,
un premier capot (11) de protection étant prévu fixé au premier système (10) de poussée en un point (12) de connexion par une unité (13) de fixation, qui a une première partie (1311) de fixation sur le premier capot (11) de protection et une deuxième partie (1310) de fixation sur le premier système (10) de poussée,
dans lequel, avant la fixation du premier capot (11) de protection, après que, par la liaison formée par le premier et le deuxième élément (131, 132) de fixation, le deuxième élément (132) de fixation, qui s'étend suivant une direction (8) axiale, a été fixé au système (10) de poussée, on met la couche (14) d'étanchéité sur le premier système (1) de poussée,
dans lequel on fixe, sur le premier système (10) de poussée, le premier capot (11) de protection par une liaison, qui a le premier élément (131) de fixation et le deuxième élément (132) de fixation et un troisième élément (133) de fixation, l'unité (13) de fixation comprenant le troisième élément (133) de fixation et le premier élément (131) de fixation fixant une épaisseur (d) de la couche (14) d'étanchéité au point (12) de connexion entre le premier capot (11) de protection et le premier système (10) de poussée.

14. Procédé de fabrication d'une machine (1) électrique suivant l'une des revendications 1 à 11, dans lequel l'entrefer (6) est délimité dans des directions (9) radiales, qui sont orientées perpendiculairement à la direction (8) axiale, par le stator (2) et le rotor (4) et qui comprend l'enroulement (7), qui est disposé à l'entrefer (6), et le rotor (4), qui est monté tournant autour d'un axe (5) de rotation s'étendant axialement et qui coopère, lorsque la machine (1) électrique est en fonctionnement avec le stator (2) par l'intermédiaire de l'entrefer (6),
- dans lequel le stator (2) a le paquet (3) de tôles, qui comprend des tôles (31), qui sont feuilletées dans la direction (8) axiale et qui sont disposées de la première extrémité (32) axiale à la seconde extrémité (33) axiale,
- dans lequel le stator (2) a le premier système (10) de poussée, qui est disposé sur la première extrémité (32) axiale,
un premier capot (11) de protection étant prévu fixé en un point (12) de connexion par une unité (13) de fixation, qui a une première partie (1311) de fixation sur le premier capot (11) de protection et une deuxième partie (1310) de fixation sur le premier système (10) de poussée,
dans lequel, avant la fixation du premier capot (11) de protection, après que, par la liaison formée par le premier et le deuxième élément (131, 132) de fixation, le deuxième élément (132) de fixation, qui s'étend suivant une direction (8) axiale, a été fixé au système (10) de poussée, on met la couche (14) d'étanchéité sur le premier système (1) de poussée,
dans lequel on fixe le premier capot (11) de protection sur le premier système (10) de poussée par une liaison, qui a le premier élément (131) de fixation, le deuxième élément (132) de fixation et un troisième élément (133) de fixation, dans lequel on monte le stator (2) dans la machine (1) électrique, dans lequel l'unité (13) de fixation comprend le troisième élément (133) de fixation et le premier élément (131) de fixation fixe une épaisseur (d) de la couche (14) d'étanchéité au point (12) de connexion entre le premier capot (11) de protection et le premier système (10) de poussée.
